# EUROPEAN PATENT SPECIFICATION

(11) **EP 0 359 176 B1**
(45) Date of publication and mention of the grant of the patent: **14.07.1993**
(21) Application number: 89116780.1
(22) Date of filing: 11.09.1989
(51) Int. Cl.: B60T 8/18

(54) **Industrial vehicle provided with an adjustment device for a braking corrector**
Lastkraftwagen mit Einstellmöglichkeit für lastabhängiges Bremsventil
Véhicule industriel avec dispositif de réglage pour correcteur de freinage

(30) Priority: 13.09.1988 IT 5339688
(43) Date of publication of application: 21.03.1990
(73) Proprietor: IVECO FIAT S.p.A., 10156 Torino (IT)
(72) Inventor: Seminario, Domenico, IT-25089 Villanova Sul Clisi (IT)
(74) Representative: Jorio, Paolo

(56) References cited:
- DE-A- 2 401 337
- DE-A- 2 425 888
- DE-A- 2 800 122
- DE-A- 3 336 953
- DE-U- 8 711 510
- GB-A- 2 001 145
- GB-A- 2 144 500
- GB-A- 2 160 605

## Description

This invention relates to an industrial vehicle provided with an adjustment device for a braking corrector.

An automatic device known as a braking corrector is generally installed in industrial vehicles provided with hydraulic brakes in order to adapt the braking to the carried load.

Basically, the braking corrector is a mechanism which acts on the hydraulic brake control circuit to adapt the braking force acting on an axle to the axle load, in order to avoid those difficulties which arise during vehicle deceleration, particularly with an unloaded vehicle, when the front axle undergoes an increase in load whereas the rear axle loses load. In the case of a fully loaded vehicle the braking corrector enables the front and rear brakes to be operated under the same pressure, whereas if the vehicle is not fully loaded or is empty the corrector enables the rear brakes to be operated at a different pressure from the front brakes in order to counterbalance the aforesaid effects which arise during deceleration.

When in use, the braking corrector is mounted rigid with the vehicle frame and is provided with a piston connected to the axle structure by a rod to control the hydraulic pressure of the braking system for the rear wheels according to the vehicle load (and thus according to the distance between the axle and the frame).

In particular, with the vehicle unloaded the corrector is adjusted to reduce the pressure as much as possible, and this means that a certain clearance is left between the corrector piston and the control rod.

When the vehicle is loaded, the frame descends to approach the axle, so that the suitably pivoted control rod presses against the corrector piston to allow the pressure generated by the master cylinder of the braking system to reach the rear and front wheel brake cylinders without reducing in value.

In a currently used system, the braking corrector is controlled by a tie rod of adjustable length interposed between the axle structure (by a suitable bracket provided whith a ball joint) and the frame, and is fixed to a torsion bar which is suitably pivoted at one end and acts on the corrector operating piston according to the distance by which the axle structure is diplaced.

Whit the vehicle unloaded, the setting is done as follows:
1) The clearance between the torsion bar and corrector piston is measured.
2) A first attempt is made at adjustment by unscrewing the ball joint from the bracket fixed to the axle structure and shortening or lengthening the tie rod according to the amount of clearance measured under point 1).
3) The ball joint is again screwed down on the bracket fixed to the axle structure.

The measurement of point 1) is repeated and if the clearance still does not fall within the prescribed limits the operations under points 2) and 3) are repeated until the required clearance value is obtained.

With the vehicle loaded the setting can be done either by raising the frame until reaches a position corresponding to a weight to the rear tare weight of the vehicle and then operating as described under points 2), 3) and 1) above, or by connecting pressure gauges (one upstream and one downstream of the corrector) and setting the corrector to obtain pressure values taken from calibrated curve.

As is apparent, the tie rod and the torsion bar are not simple to apply and the operations involved in setting the intervention values of the braking corrector are not easy to perform, the setting also depending on the type of body construction used to complete the vehicle by the manufacturer or by an outside constructor.

It is also known from the document DE-A-33 36 953 an adjustment device, wherein a lever, having a shaped perimetral edge acting on the end of a corrector's piston, is connected to a rod secured to the reas axle structure, by the intermediary of a spring and an adjustable lever.

The object of the present invention is to provide an adjustment device for a vehicle braking corrector which is free of the aforesaid drawbacks by allowing rapid, simple and accurate setting of the braking corrector under any operating condition.

This is attained according to the present invention by an industrial vehicle provided with an adjustment device for a braking corrector including an axially movable piston, said device comprising a rod fixed lowerly to the rear axle structure of said vehicle, a lever hinged on a pin carried by a portion of the frame of said vehicle, said lever having a shaped perimetral edge acting on the end of said piston, an elastic element connected to the upper end of said rod, and fixing means to adjust the operating condition of said lever, characterised in that:
- said elastic element is hinged at a first end to said upper end of said rod, and is hinged at its second end on said pin; and
- said fixing means is provided between said second end of said elastic element and said lever to define the angular position of said lever relative to said pin.

The present invention will be more apparent from the description of a preferred embodiment given bhereinafter by way of non-limiting example with reference to the accompagnying drawing.

In said drawing, the reference numeral 1 indicates overall an adjustment device for a braking corrector 2 installed in a vehicle provided with hydraulic brakes both for its rear wheels and front wheels.

The braking corrector 2 is a member of known type the purpose of wich is to adapt the pressure of the rear wheel hydraulic brakes to the load transported by the vehicle, to allow correct braking.

As is well known, this is done correctly only if the hydraulic circuit which feeds the brakes is controlled in such a manner that their hydraulic operating pressures are equal when the vehicle is fully loaded, but are different when the vehicle is not completely loaded or is unloaded. Specifically, the pressure in the rear wheel brakes is a maximum when the vehicle is fully loaded and decreases proportionally to the load when the load is less than full.

Said vehicle is shown only in part, the dashed and dotted lines representing a rear axle structure 3 whith relative arms 4 and the full lines representing two longitudinal members 5 which together with non-illustrated cross-members form the vehicle frame (not shown).

The adjustement device 1 is mounted between the frame and the rear axle structure 3 and allows the braking corrector 2 to be properly set both with the vehicle loaded and unloaded in the simple manner described hereinafter.

The braking corrector 2 is rigidly connected to the frame so that it can follow the load-dependent movements of the frame relative to the axle structure 3. In this example of application, the braking corrector 2 is carried by a plate 6 fixed to one of the longitudinal members 5 of said frame for example by welding.

The adjustment device 1 comprises a fixed-length rod 7 disposed substantially vertical and lowerly secured to the rear axle structure 3 at a predetermined point, and an elastic element 8 consisting of a round bar bent to define a spiral 11.

The element 8 comprises two flat longitudinal end portions and is hinged at a first end portion 12 to the upper end of the rod 7, and at the second end portion 13 to a pin 14 supported by the plate 6.

On the pin 14 there is also hinged a flat lever 15 of substantially triangular contour and having a first vertex pivoted on the pin 14, a second vertex fixed to the lower end of a preloaded helical spring 16 (the other end of which is fixed to the upper portion of the plate), and a third vertex below but vertically in line with the second vertex. Between the first and second vertex of the lever 15 there acts on the corresponding perimetral edge an outwardly extending end portion of the piston 17 of the braking corrector 2.

The action of the spring 16 therefore results in constant contact between the piston 17 and the perimetral edge of lever 15 when bolt 21 is loosened. The perimetral edge of lever 15 is suitably shaped and in particolar is of substantially undulated pattern. The angular position of the lever 15 about the pin 14 defines a particular point of contact between said perimetral edge and the piston 17, and thus determines the axial position of the piston 17.

The pattern of the shaped edge of lever 15 is such that having predetermined the angular position of the lever 15 with the vehicle empty, the axial position of the piston 17 obtained when the vehicle is fully loaded is such as to determine equal pressure on the front and back brakes.

Between the second and third vertex of the lever 15 there is a through slot 18 with a longitudinal axis which describes a circumferential arc with its centre on the pin 14. The lever 15 and the end portion 13 of the elastic element 8 form a single body because they are clamped together by a bolt 21, the shank of which passes in succession through a through hole provided in the end portion 13 and through the slot 18, beyond which it is engaged by a nut, not shown.

Finally, device 1 presents a fork 19 supported on the shank of bolt 21; and a screw 20 (whith a lock nut 25), engaging a through hole on fork 19 and acting on the third vertex of lever 15 for regulating the angular position the same and so preloading piston 17 as described hereinafter.

The device according to the present invention operates as follows.

After predetermining the angular position of the lever 15 with the vehicle empty and thus the point of contact between the shaped edge of the lever 15 and the piston 17, the relationship between the pressure acting on the rear brakes and the weight of the transported load is chosen.

In this respect, on varying the weight of the transported load, the distance of the frame from the axle structure 3 varies, as does the location of the point of contact between the shaped edge of the lever 15 and the piston 17. Consequently, the axial position of this latter is a function of the weight of the transported load. The braking corector 2 can thus act to adjust the pressure on the rear brakes according to the weight of the transported load.

It is therefore important to determine for each vehicle the angular position of the lever 15 to be set for the vehicle under full or no-load.

To make the setting for an empty vehicle it is necessary only to firstly slacken the bolt 21 so releasing the lever 15 from the end portion 13 of the element 8, then to interpose between the piston 17 and the shaped edge of the lever 15 a spacer of predetermined thickness to ensure a predetermined clearance between them, and finally to reclamp the lever 15 to the end portion 13 by the bolt 21. For correct setting, the user must press the brake pedal when interposing the spacer. It is also possible to set the angular position of the lever 15 before assembling the vehicle by applying a suitable weight at the third vertex of the lever 15 to define said clearance between the piston 17 and the shaped edge of the lever 15.

Full-vehicle-load setting of break corrector 2 may be achieved in two ways:
a) raise the frame until its acting weight corresponds to the rear tare weight of the vehicle, and then carry out the operations described for setting an empty vehicle;
b) instead of raising the frame, adjust screw 20 supported on fork 19, so as to preload piston 17 by turning lever 15 about pin 14, then lock bolt 21 and nut 25 using screw 20.

The advantages of the present invention are apparent from the aforegoing description. in particular, using the device 1 the angular position of the lever 15 can be easily set to obtain corect adjustment of the braking corrector 2. Using metod a), this operation can be done with the vehicle either empty or under full load, without the aid of special equipment such as pressure gauges, which are, however, required for method b).

The device 1 is provided with an elastic element 8 which operates by flexure and can therefore be made of shorter length than in similar currently used devices which instead of said elastic element use a variable-length tie rod.

Finally, the corrector can also be adjusted on the premises of the manufacturer with the vehicle still on the assembly line, it thus being possible to adjust the corrector 2 for a particular vehicle tare weight which can differ according to the subsequent body construction.

Finally, it is apparent that modifications can be made to the described device 1, but without leaving the scope of the invention as claimed.

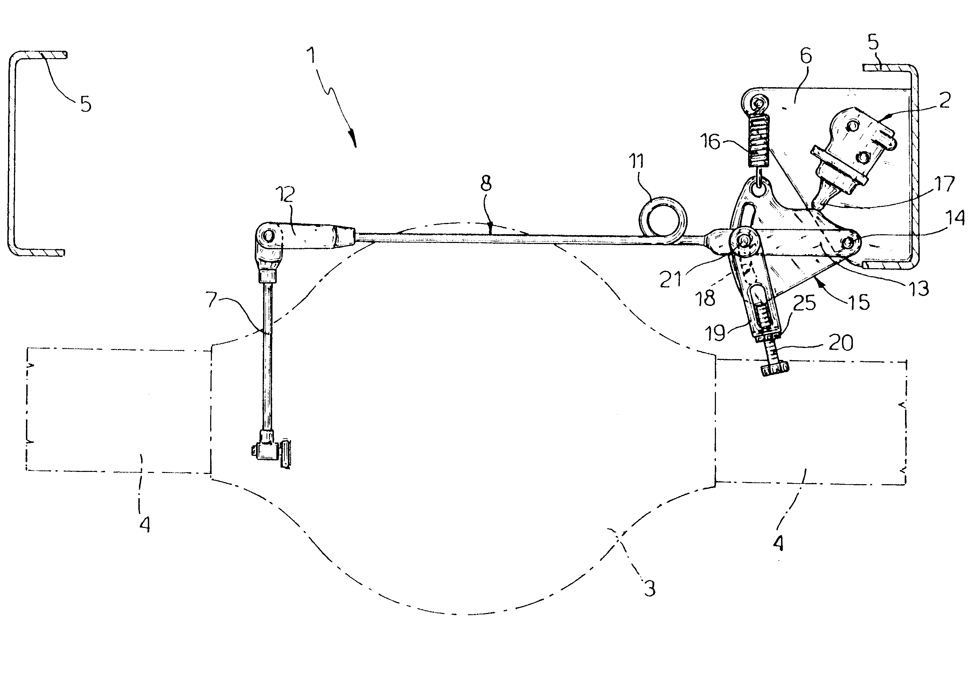

## Claims

1. An industrial vehicle provided with an adjustment device for a braking corrector including an axially movable piston, said device (1) comprising a rod (7) fixed lowerly to the rear axle structure (3) of said vehicle, a lever (15) hinged on a pin (14) carried by a portion (5 and 6) of the frame of said vehicle, said lever (15) having a shaped perimetral edge acting on the end of said piston (17), an elastic element (8) connected to the upper end of said rod (7), and fixing means (21) to adjust the operating condition of said lever (15), characterised in that:
- said elastic element is hinged at a first end portion (12) to said upper end of said rod (7), and is hinged at its second end portion (13) on said pin (14); and
- said fixing means (21) is provided between said second end portion (13) of said elastic element (8) and said lever (15) to define the angular position of said lever (15) relative to said pin (14).

2. A vehicle as claimed in claim 1, characterised in that said lever (15) comprises a through slot (18) the longitudinal axis of which defines a circumferential arc with its centre on said pin (14); said fixing means comprising a bolt (21) the shank of which passes in succession through a through hole provided in proximity to said second end portion (13) of said elastic element (8) and through said slot (18), beyond which it is engaged by a clamping nut.

3. A vehicle according to claim 2, characterised in that said lever (15) comprises a first vertex pivoted on said pin (14), a second vertex fixed to spring means (16) which ensure contact between said shaped edge and said piston (17), and a third vertex vertically in line with the second vertex; said shaped edge being provided between the first and second vertex, and said through slot (18) being provided between the second and third vertex.

4. A vehicle as claimed in Claim 3, characterised in that it comprises means (19) supporting a set screw (20) acting on the third vertex of said lever (15) for regulating the position of said lever (15) in relation to the piston (17) of said brake corrector (2).

5. A vehicle as claimed in Claim 4, characterised in that said supporting means (19) are substantially fork-shaped an supported on the shank of said bolt (21).

6. A vehicle as claimed in at least one of claims 3 to 5, characterised in that said frame portion of said vehicle consists of a longitudinal member (5) to which there is rigidly joined a plate (6) supporting said corrector (2), said pin (14) and said spring means (16).

7. A vehicle as claimed in at least one of the preceding claims, characterised in that said elastic element (8) consists of a round bar in which at least one spiral turn (11) is provided.

## Patentansprüche

1. Lastkraftwagen mit einer Einstelleinrichtung für eine lastabhängige Bremseinstelleinrichtung, mit einem axial beweglichen Kolben, welche Einrichtung (1) eine Stange (7) umfaßt, die unten an der Hinterachskonstruktion (3) des Fahrzeugs befestigt ist, einem Hebel (15), der auf einem Stift (14) scharnierförmig gelagert ist, der von einem Bereich (5 und 6) des Fahrzeugrahmens getragen wird, welcher Hebel (15) eine geformte Außenkante aufweist, die auf das Ende des Kolbens (17) einwirkt, sowie einem elastisches Element (8), das mit dem oberen Ende der Stange (7) verbunden ist, und einer Befestigungseinrichtung (21) zum Einstellen des Betriebszustandes des Hebels (15), dadurch **gekennzeichnet**, daß
- das elastische Element scharnierförmig an einem ersten Endbereich (12) mit dem oberen Ende der Stange (7) und an seinem zweiten Endbereich (13) mit dem Stift (14) verbunden ist, und
- die Befestigungseinrichtung (21) vorgesehen ist zwischen dem zweiten Endbereich (13) des elastischen Elements (8) und dem Hebel (15) zur Definition der Winkelposition des Hebels (15) in bezug auf den Stift (14).

2. Lastkraftwagen nach Anspruch 1, dadurch **gekennzeichnet,** daß der Hebel (15) einen durchgehenden Schlitz (18) aufweist, dessen Längsachse einen Umfangsbogen mit dem Zentrum auf dem Stift (14) bildet, wobei die Befestigungseinrichtung eine Schraube (21) umfaßt, deren Schaft nacheinander durch eine Durchgangsbohrung in der Nähe des zweiten Endbereichs (13) des elastischen Elements (8) und durch den Schlitz (18) verläuft, hinter dem er durch eine Klemm-Mutter erfaßt ist.

3. Lastkraftwagen nach Anspruch 2, dadurch **gekennzeichnet**, daß der Hebel (15) einen ersten Scheitel, der schwenkbar auf dem Stift (14) gelagert ist, einen zweiten Scheitel, der an einer Federeinrichtung (16) befestigt ist, die den Kontakt zwischen der geformten Kante und dem Kolben (17) sicherstellt, und einen dritten Scheitel umfaßt, der senkrecht mit dem zweiten Scheitel ausgerichtet ist, welche geformte Kante zwischen dem ersten und dem zweiten Scheitel liegt, wobei der durchgehende Schlitz (18) zwischen dem zweiten und dritten Scheitel liegt.

4. Lastkraftwagen nach Anspruch 3, dadurch **gekennzeichnet,** daß er eine Einrichtung (19) umfaßt, die eine Einstellschraube (20) trägt, die auf den dritten Scheitel des Hebels (15) einwirkt und die Position des Hebels (15) in bezug auf den Kolben (17) der Bremseinstelleinrichtung (2) regelt.

5. Lastkraftwagen nach Anspruch 4, dadurch **gekennzeichnet,** daß die Stützeinrichtung (19) im wesentlichen gabelförmig ausgebildet und an dem Schaft der Schraube (21) gehalten ist.

6. Lastkraftwagen nach wenigstens einem der Ansprüche 3 bis 5, dadurch **gekennzeichnet,** daß der Rahmenbereich des Fahrzeugs aus einem längsgerichteten Glied (5) besteht, an dem starr eine Platte (6) befestigt ist, die die Einstelleinrichtung (2), den Stift (14) und die Federeinrichtung (16) trägt.

7. Lastkraftwagen nach wenigstens einem der vorhergehenden Ansprüche, dadurch **gekennzeichnet,** daß das elastische Element (8) aus einer runden Stange besteht, in der wenigstens eine spiralförmige Wendel (11) ausgebildet ist.

## Revendications

1. Un véhicule industriel pourvu d'un correcteur de freinage doté d'un piston mobile axialement, ledit dispositif (1) comprenant une tringle (7), fixée à sa partie inférieure sur la structure de l'essieu arrière (3) dudit véhicule, un levier (15) articulé sur un axe (14), fixé sur une partie (5 et 6) du châssis dudit véhicule, ledit levier (15) comportant un bord périphérique profilé agissant sur l'extrémité dudit piston (17), un élément élastique (8) relié à l'extrémité supérieure de ladite tringle (7), et des moyens de fixation (21) pour régler l'état de fonctionnement dudit levier (15), caractérisé en ce que:
- ledit élément élastique est articulé par une première partie d'extrémité (12) à ladite extrémité supérieure de ladite tringle (7), et est articulé par sa deuxième partie d'extrémité (13) sur ledit axe (14); et
- lesdits moyens de fixation (21) sont prévus entre ladite deuxième partie d'extrémité (13) dudit élément élastique (8) et ledit levier (15), pour définir la position angulaire dudit levier (15) par rapport audit axe (14).

2. Un véhicule selon la revendication 1, caractérisé en ce que ledit levier (15) comprend une fente débouchante (18) dont l'axe longitudinal définit un arc circonférentiel dont le centre est situé sur ledit axe (14); lesdits moyens de fixation comprenant un boulon (21) dont la tige traverse, successivement, un trou débouchant ménagé à proximité de ladite deuxième partie d'extrémité (13) dudit élément élastique (8) ainsi que ladite fente (18), au delà de laquelle il est bloqué en prise par un écrou de serrage.

3. Un véhicule selon la revendication 2, caractérisé en ce que ledit levier (15) comprend un premier sommet pivotant sur ledit axe (14), un deuxième sommet fixé sur lesdits moyens élastiques (16) établissant un contact entre ledit bord profilé et ledit piston (17), et un troisième sommet, verticalement dans l'alignement du deuxième sommet; ledit bord profilé étant prévu entre les premier et deuxième sommets, et ladite fente débouchante (18) étant prévue entre le deuxième et le troisième sommet.

4. Un véhicule selon la revendication 3, caractérisé en ce qu'il comprend des moyens (19) supportant une vis de réglage (20) agissant sur le troisième sommet dudit levier (15) pour régler la position dudit levier (15) par rapport au piston (17) dudit correcteur de freinage (2).

5. Un véhicule selon la revendication 4, caractérisé en ce que lesdits moyens de support (19) sont sensiblement en forme de fourche et montés sur la tige dudit boulon (21).

6. Un véhicule selon, au moins, l'une des revendications 3 à 5, caractérisé en ce que ladite partie de châssis dudit véhicule comprend un longeron (5) sur lequel est fixé rigidement une plaque (6) supportant ledit correcteur (2), ledit axe (14) et lesdits moyens élastiques (16).

7. Un véhicule selon l'une quelconque des revendications précédentes, caractérisé en ce que ledit élément élastique (8) comprend une tige ronde dans laquelle, au moins, une spire (11) a été ménagée.
